# EUROPÄISCHE PATENTSCHRIFT

(11) **EP 3 353 650 B1**
(45) Veröffentlichungstag und Bekanntmachung des Hinweises auf die Patenterteilung: **04.05.2022**
(21) Anmeldenummer: 16763495.5
(22) Anmeldetag: 06.09.2016
(51) Int. Cl.: G06F 8/60

(54) **SYSTEM UND VERFAHREN ZUR VERTEILUNG UND/ODER AKTUALISIERUNG VON SOFTWARE IN VERNETZTEN STEUEREINRICHTUNGEN EINES FAHRZEUGS**
SYSTEM AND METHOD FOR DISTRIBUTING AND/OR UPDATING SOFTWARE IN INTERCONNECTED CONTROL DEVICES OF A VEHICLE
SYSTEME ET PROCÉDÉ DE DISTRIBUTION ET/OU DE MISE À JOUR DE LOGICIELS DANS DES DISPOSITIFS DE COMMANDE EN RÉSEAU D'UN VÉHICULE

(30) Priorität: 21.09.2015 DE 102015115855
(43) Veröffentlichungstag der Anmeldung: 01.08.2018
(73) Patentinhaber: KNORR-BREMSE Systeme für Nutzfahrzeuge GmbH, 80809 München (DE)
(72) Erfinder: JUNDT, Oliver, 74394 Hessigheim (DE); HUMMEL, Stefan, 70191 Stuttgart (DE)
(86) Internationale Anmeldenummer: PCT/EP2016/070910
(87) Internationale Veröffentlichungsnummer: WO 2017/050557

(56) Entgegenhaltungen:
- DE-C1- 4 315 494
- US-A1- 2007 005 204
- US-A1- 2014 208 306

## Beschreibung

Die Erfindung betrifft ein Verfahren zur Verteilung und/oder Aktualisierung von Software in vernetzten Steuereinrichtungen eines Kraftfahrzeugs gemäß dem Oberbegriff von Anspruch 1 sowie ein System zur Verteilung und/oder Aktualisierung von Software in vernetzten Steuereinrichtungen eines Kraftfahrzeugs gemäß dem Oberbegriff von Anspruch 11.

Beispielsweise besteht ein elektronisches Bremssystem (EBS) aus einer Vielzahl einzelner Steuergeräte, wie etwa einem Zentralsteuergerät (ECU) und solchen, die in etwa einem oder mehreren Druckregelmodulen (EPM), einem Fußbremsmodul (FBM) und einem Anhängersteuermodul (TCM) und dergleichen angeordnet sind. In jedem dieser Steuergeräte befindet sich wenigstens eine Steuereinrichtung, die mit einer Software betrieben wird. Alle Steuergeräte werden im Auslieferungszustand des Fahrzeugs mit Software vorprogrammiert ausgeliefert.

Da im Laufe der Zeit Softwareaktualisierungen in unterschiedlichen Steuergeräten durchgeführt werden können, entstehen zahlreiche unterschiedliche Kombinationsmöglichkeiten, welche sämtlich eine Freigabe erfordern. In der Regel erfolgt dies derzeit sehr zeitintensiv und kostenintensiv mittels HIL (Hardware in the Loop), d. h. einem Verfahren, bei dem ein eingebettetes System (z. B. ein reales elektronisches Steuergerät oder eine reale mechatronische Komponente) über seine Ein- und Ausgänge an ein angepasstes Gegenstück, das im allgemeinen HiL-Simulator genannt wird und als Nachbildung der realen Umgebung des Systems dient, angeschlossen wird (Prüfstand).

Falls ein Softwareupdate in nur einem Steuergerät erfolgen soll, muss sichergestellt werden, dass eine neue Software bzw. Softwareversion mit der Software der übrigen Steuergeräte kompatibel ist. Treten Inkompatibilitäten auf, müssen in einem Nachmarkt unterschiedliche Steuergeräte mit unterschiedlichen Softwareständen bereitgehalten werden. Zudem verhindert der Zwang zur Abwärtskompatibilität Weiterentwicklungen, insbesondere dann, wenn diese Weiterentwicklungen Änderungen an einer Schnittstelle nach sich ziehen.

Wenigstens die vorgenannten Probleme sind im Stand der Technik bisher ungelöst, da zum Teil erheblicher Aufwand erforderlich ist, um etwa bei vernetzten Fahrzeugsteuereinrichtungen kompatible Softwareversionsstände sicherzustellen. DE 43 15 494 C1 offenbart ein gattungsgemäßes Verfahren sowie ein gattungsgemäßes System.

Der Erfindung liegt als Aufgabe zugrunde, ein System und ein Verfahren zur Verteilung und/oder Aktualisierung von Software und/oder Parametern in vernetzten Steuereinrichtungen eines Fahrzeugs zu schaffen, welche eine automatische Programmierung und/oder Aktualisierung von Teilsystemen oder Steuereinrichtungen in einem vernetzten Steuergeräteverbund eines Kraftfahrzeugs ermöglichen und eine Wartung, einen Austausch oder den Betrieb, insbesondere eine Wartung hinsichtlich einer Neuprogrammierung oder Aktualisierung einer Softwarekomponente und/oder von Parametern oder damit verbundener Module, verbessern.

Erfindungsgemäß wird diese Aufgabe durch die Merkmale der Patentansprüche 1 und 11 gelöst. Vorteilhafte Weiterbildungen der Erfindung sind Gegenstand der beigefügten Unteransprüche.

Der Erfindung liegt die allgemeine Idee zugrunde, in einem vernetzen Teilsystem oder Steuergeräteverbund eines Kraftfahrzeugs in einer Mastereinrichtung Software und/oder Parameter für wenigstens ein Teilsystem, das insoweit eine Slaveeinrichtung oder Slave-Steuereinrichtung bildet, zu speichern. Die Software an sich, die in der Mastereinrichtung abgelegt und vorgehalten wird, ist in bekannter Art und Weise programmiert. Das wenigstens eine Teilsystem, d. h. die Slaveeinrichtung, wird bei seiner Herstellung mit nur einem sehr kleinen Softwareteil oder Softwaremodul ausgestattet oder ausgeliefert, der bzw. das beispielsweise in Form eines Bootladers vorgesehen sein kann. Dieser sehr kleine Softwareteil verbleibt idealerweise unverändert, d. h. ändert sich idealerweise auch über Generationen von Steuergeräten hinweg nie, und ist dazu konfiguriert, die gesamte Slaveeinrichtung zu programmieren. Zu einem vorbestimmten Zeitpunkt, beispielsweise bei einer erstmaligen Energiezufuhr oder in vorbestimmten zeitlichen Abständen, prüft die Mastereinrichtung, ob die zumindest eine Slaveeinrichtung bereits mit der gesamten erforderlichen Software und/oder vorbestimmten Parametern programmiert wurde, und ob diese Software und/oder Parameter auf aktuellem Versionsstand ist/sind. Alternativ kann eine solche Prüfung auch in der Slaveeinrichtung durchgeführt werden, die dann ein entsprechendes Prüfungsergebnis an die Mastereinrichtung übermitteln kann. Weiter alternativ kann die Slaveeinrichtung eine Identifikation ihrer selbst und/oder eine Programmierungsanforderung an die Mastereinrichtung übermitteln, und kann im Ansprechen darauf die Mastereinrichtung kompatible Softwareteile und/oder Parameter ermitteln und bereitstellen. Wird im Rahmen der vorgenannten Prüfung oder Anforderung festgestellt, dass die zumindest eine Slaveeinrichtung noch nicht mit der erforderlichen Software und/oder den erforderlichen Parametern programmiert wurde, und/oder diese Software und/oder Parameter nicht auf aktuellem Versionsstand ist/sind, führt die Mastereinrichtung selbstständig eine Programmierung der Slaveeinrichtung über das Netzwerk durch. Alternativ kann vorgesehen sein, dass die Mastereinrichtung prüfungs- und/oder anforderungsunabhängig, beispielsweise bei jedem Einschaltvorgang oder bei jeder Anschaltung der Energieversorgung, die Slaveeinrichtung programmiert. Alternativ kann die Programmierung der Slaveeinrichtung semiautomatisch erfolgen und beispielsweise durch eine Anweisung im Rahmen eines Wartungs- und/oder Diagnosevorgangs angestoßen werden.

Vorteilhaft ist die vorgenannte allgemeine Idee auch auf in dem vernetzen Teilsystem oder Steuergeräteverbund zugrunde liegende, verwendete und/oder zu übergebende Parameter anwendbar, so dass dann, wenn sich beispielsweise eine Parameterstruktur von einer Software bzw. einem Versionsstand zu einer/einem anderen ändert, nicht nur die Software selbst, sondern auch die entsprechenden Parameter aktualisierbar sind. In der nachfolgenden Beschreibung beinhaltet und bedeutet daher der Begriff "Software" grundlegend sowohl Software an sich, d. h. Programmteile, Code, Module, Betriebsmodule und dergleichen, als auch zumindest Parameter mit jeweils Zugehörigkeit und/oder vorbestimmtem, entsprechendem oder geeignetem Bezug dazu.

Die Mastereinrichtung hält unterschiedliche Softwareversionen für eine Vielzahl von Slaveeinrichtungen vor und programmiert nach Durchführung einer Hardwareversionsprüfung einer Slaveeinrichtung die für diese Slaveeinrichtung geeignete Software in die Slaveeinrichtung. Außerdem vorteilhaft kann die Mastereinrichtung unterschiedliche Software und/oder Softwareversionen für eine Vielzahl artgleicher oder artverschiedener Slaveeinrichtungen vorhalten und nach Durchführung einer Artprüfung einer Slaveeinrichtung die für diese Slaveeinrichtung geeignete Software in diese programmieren. Die Art- und/oder Hardwareversionsprüfung kann darüber hinaus Grundlage für eine Erfassung oder Entscheidung dahin gehend bilden, dass die vernetzte Slaveeinrichtung nicht programmierbar ist. In anderen Worten kann eine Erkennung vorgesehen sein, dass die Slavehardware nicht programmiert werden kann.

Erfindungsgemäß wird somit sichergestellt, dass miteinander kompatible Software verteilt und programmiert wird, da die Mastereinrichtung eine kompatible Software für alle Slaveeinrichtungen enthält. Hierzu kann, wie es beispielsweise bei einem elektronischen Bremssystem der Fall ist, eine Art Zentrale, beispielsweise in Form einer drahtgebunden oder drahtlos angebundenen oder vernetzten Servereinrichtung, vorgesehen und bereitgestellt sein, welche über ausreichend große Ressourcen verfügt und für auch schnelle Änderungszyklen ausgelegt ist. Es wird angemerkt, dass eine Vielzahl von Slaveeinrichtungen mit einer Mastereinrichtung vernetzt sein und von dieser programmiert werden können, und dass darüber hinaus auch mehrere Mastereinrichtungen eine oder mehrere entsprechend vernetzte Slaveeinrichtungen programmieren können.

Erfindungsgemäß können vorteilhaft Inkompatibilitäten zwischen den vernetzten Teilsystemen vermieden werden, und kann eine aufwendige Prüfung von Softwareversionskombinationen entfallen. Ein Anwendungsbeispiel ist ein elektronisches Bremssystem für beispielsweise Nutzfahrzeuge, in welchem eine Zentraleinheit (als Master) über einen CAN-Bus (als Netzwerk) mit einem oder mehreren Raddruckregelmodulen (EPM), einem Fußbremsmodul (FBM) und gegebenenfalls einem Anhängersteuermodul (TCM) verbunden ist.

Die Aufgabe wird somit im Einzelnen gelöst durch ein Verfahren zur Verteilung und/oder Aktualisierung von Software in vernetzten Steuereinrichtungen, beinhaltend die Schritte: Speichern lediglich eines werksseitig vorprogrammierten Grundmoduls zur Initialisierung und Programmierung einer von einer Vielzahl von programmierbaren Untersteuereinrichtungen, die Teil eines vernetzten Systems von Steuereinrichtungen bilden, in jeweils einem ersten Speicherbereich jeder Untersteuereinrichtung; Speichern von werksseitig vorprogrammierter Software in Form von Betriebsmodulen für alle der Vielzahl von programmierbaren Untersteuereinrichtungen des vernetzten Teilsystems in zumindest einer Hauptsteuereinrichtung, die ebenfalls Teil des vernetzten Teilsystems von Steuereinrichtungen bildet, in einem zweiten Speicherbereich der Hauptsteuereinrichtung; zu einem vorbestimmten Zeitpunkt und/oder bedarfsweise Übertragen zumindest eines Betriebsmoduls, das für zumindest eine bestimmte der Vielzahl von programmierbaren Untersteuereinrichtungen vorgesehen ist, selbstständig von der Hauptsteuereinrichtung an die zumindest eine bestimmte Untersteuereinrichtung; und selbstständiges und betriebsfähiges Programmieren der zumindest einen bestimmten Untersteuereinrichtung mit dem von der Hauptsteuereinrichtung empfangenen zumindest einen Betriebsmodul unter Verwendung des Grundmoduls, wobei das Grundmodul unverändert bleibt.

Bevorzugt beinhaltet das erfindungsgemäße Verfahren einen Schritt des Prüfens mittels einer Prüfeinrichtung zu dem vorbestimmten Zeitpunkt, ob alle der programmierbaren Untersteuereinrichtungen bereits betriebsfähig und/oder mit einem vorbestimmten Softwarestand programmiert sind, und in Abhängigkeit von dem Ergebnis der Prüfung Auslösen eines selbstständigen Programmierens nicht betriebsfähiger und/oder nicht mit einem vorbestimmten Softwarestand programmierter Untersteuereinrichtungen für Betriebsfähigkeit und/oder zur Aktualisierung auf einen vorbestimmten Softwarestand. Vorteilhaft wird dadurch sichergestellt, dass die Betriebsmodule bzw. Softwareteile miteinander kompatibel sind, da die die Rolle eines sogenannten Masters übernehmende Hauptsteuereinrichtung kompatible Betriebsmodule bzw. Software für die als sogenannte Slaves arbeitenden Untersteuereinrichtungen enthält.

Bevorzugt beinhaltet das erfindungsgemäße Verfahren, dass die Prüfung in der Hauptsteuereinrichtung durchgeführt wird, wobei eine zu programmierende Untersteuereinrichtung ermittelt und eine Übertragung zumindest eines für die ermittelte Untersteuereinrichtung bestimmten Betriebsmoduls an dieselbe veranlasst wird. Dies kann vorteilhaft sein, wenn bei vernetzen Teilsystemen die Software für alle/mehrere/ein Teilsystem(e) in einem System gespeichert wird (Master). Die Software im Master kann dann auf einfache Weise programmiert werden. Falls es, wie beim Ausführungsbeispiel EBS eine Zentrale gibt, bietet sich diese wegen größter Ressourcen und schnellsten Änderungszyklen dazu an.

Alternativ bevorzugt beinhaltet das erfindungsgemäße Verfahren, dass die Prüfung in jeder der Untersteuereinrichtungen durchgeführt wird, wobei eine Notwendigkeit einer Programmierung der Untersteuereinrichtung, in der sie durchgeführt wird, ermittelt und eine Übertragung zumindest eines für diese Untersteuereinrichtung bestimmten Betriebsmoduls von der Hauptsteuereinrichtung angefordert wird. Vorteilhaft kann auf diese Weise Verarbeitungslast auf der Hauptsteuereinrichtung verringert und diese in dem zugrunde liegenden System verteilt werden. Beispielsweise kann die Hauptsteuereinrichtung nur solche Untersteuereinrichtungen unmittelbar bedienen, die sich aktiv zu erkennen geben, und einer weitergehende Systemprüfung zu anderen, gegebenenfalls besser geeigneten Zeitpunkten durchführen.

Weiterhin beinhaltet das erfindungsgemäße Verfahren die Schritte des Prüfens einer Hardwareversion zumindest einer der programmierbaren Untersteuereinrichtungen, wobei die Hauptsteuereinrichtung dazu konfiguriert ist, eine Mehrzahl von Betriebsmodulen mit unterschiedlichem Versionsstand für eine bestimmte Untersteuereinrichtung vorhaltend zu speichern; und falls die bestimmte Untersteuereinrichtung als programmierbar ermittelt wird, Übertragens eines für eine ermittelte Hardwareversion geeigneten Betriebsmoduls an die bestimmte Untersteuereinrichtung. Hierdurch wird vorteilhaft sichergestellt, dass korrekte Betriebsmodule auf unterschiedliche Hardwareversionen von Untersteuereinrichtungen gelangen, und wird im Falle einer bestehenden Nichtprogrammierbarkeit bei deren Ermittlung durch Überspringen einer aktuell untersuchten Untersteuereinrichtung und Übergang zu einer nächsten zu untersuchenden Untersteuereinrichtung einer Vergeudung von Rechen- und/oder Ermittlungs- bzw. Prüfzeit vorgebeugt.

Bevorzugt beinhaltet das erfindungsgemäße Verfahren den Schritt des unbedingten Programmierens zumindest einer der programmierbaren Untersteuereinrichtungen zu jedem vorbestimmten Zeitpunkt. Erforderlichenfalls kann hierdurch vorteilhaft das gesamte System in einen vordefinierten, kompatiblen Zustand gebracht werden. Bevorzugt beinhaltet das erfindungsgemäße Verfahren, dass der vorbestimmte Zeitpunkt ein Einschaltzeitpunkt des vernetzten Systems von programmierbaren Untersteuereinrichtungen ist und zu diesem Einschaltzeitpunkt alle der programmierbaren Untersteuereinrichtungen programmiert werden, oder ein Einschaltzeitpunkt zumindest einer der programmierbaren Untersteuereinrichtungen ist und zu diesem Einschaltzeitpunkt die zumindest eine der programmierbaren Untersteuereinrichtungen programmiert wird. Erforderlichenfalls kann hierdurch vorteilhaft das gesamte System in einen vordefinierten, kompatiblen Zustand gebracht werden.

Bevorzugt beinhaltet das erfindungsgemäße Verfahren, dass eine Programmierung der zumindest einen der programmierbaren Untersteuereinrichtungen auf eine Anweisung im Rahmen eines laufenden Systemdiagnoseprozesses durch die Hauptsteuereinrichtung und/oder zumindest eine der programmierbaren Untersteuereinrichtungen durchgeführt wird. Hierdurch kann vorteilhaft ein vorgesehener Automatismus, beispielsweise zu Zeitpunkten einer Wartung und/oder Fehlerbehebung, übersteuert werden.

Bevorzugt ist bei dem erfindungsgemäßen Verfahren das Grundmodul eine kleinste Softwareeinheit und/oder ein Bootlader. Da sich ein Bootlader idealerweise nie ändert, bleibt dieser vorteilhaft unbeeinflusst von Änderungen an Betriebsmodulen und eignet sich daher besonders, als Hauptaufgabe und Möglichkeit, die gesamte Untersteuereinrichtung bzw. Slave-Steuereinrichtung zu programmieren.

Bevorzugt beinhaltet das erfindungsgemäße Verfahren, dass die Verfahrensschritte in einem elektronischen Bremssystem eines Fahrzeugs durchgeführt werden, in dem die Hauptsteuereinrichtung eine Zentrale und/oder eine Mastereinrichtung bildet, die über einen CAN-Bus als Netzwerk mit zumindest einem Raddruckregelmodul (EPM), einem Fußbremsmodul (FBM) und/oder einem Anhängersteuermodul (TCM) als programmierbare Untersteuereinrichtungen, die jeweils Slaveeinrichtungen bilden, verbunden ist. Ein elektronisches Bremssystem in Fahrzeugen kann zwingend anzuwendenden bzw. zu aktualisierenden Normen unterworfen sein, die rasch in weiträumig verteilte Fahrzeuge mit langen Wartungsintervallen einzubringen sind. Das erfindungsgemäße Verfahren und System ist bei einer derartigen Bremsanlage vorteilhaft, weil beispielsweise die Zentrale auch den Code (Software und Daten) des Raddruckregelmoduls, des Fußbremsmoduls und des Anhängesteuermoduls enthält. Muss nun eines dieser Module ausgetauscht werden, weil die Hardware defekt ist, so wird es von der Zentrale programmiert. Hierzu muss das entsprechende nur eine Grundsoftware enthalten, die es ermöglicht von der Zentrale programmiert zu werden. Dasselbe gilt bei einem Hersteller bei der Erstprogrammierung. Auch bei einer notwendigen Aktualisierung der Zentrale, welche erforderlich sein kann, wenn sich Schnittstellen zwischen Steuergeräten ändern, können diese anderen Module im gleichen Zug aktualisiert werden. Zudem wird auf diese Weise vorteilhaft sichergestellt werden, dass alle Steuergeräte aktualisiert werden und eine getestete und freigegebene Softwareversion enthalten.

Die Aufgabe wird erfindungsgemäß auch gelöst durch ein System zur Verteilung und/oder Aktualisierung von Software in vernetzten Steuereinrichtungen eines Kraftfahrzeugs, beinhaltend eine Vielzahl von programmierbaren Untersteuereinrichtungen, die Teil eines vernetzten Systems von Steuereinrichtungen bilden und jeweils einen ersten Speicherbereich aufweisen, der lediglich ein werksseitig vorprogrammiertes Grundmodul zur Initialisierung und Programmierung der Untereinrichtung speichert; und zumindest eine Hauptsteuereinrichtung, die ebenfalls Teil des vernetzten Teilsystems von Steuereinrichtungen bildet, und einen zweiten Speicherbereich aufweist, der werksseitig vorprogrammierte Software in Form von Betriebsmodulen für alle der Vielzahl von programmierbaren Untersteuereinrichtungen des vernetzten Teilsystems speichert, wobei die Hauptsteuereinrichtung dazu konfiguriert ist, zu einem vorbestimmten und/oder bedarfsweise Zeitpunkt Software, die für zumindest eine bestimmte der Vielzahl von programmierbaren Untersteuereinrichtungen vorgesehen ist, selbstständig an die zumindest eine bestimmte Untersteuereinrichtung zu übertragen, und das Grundmodul der zumindest einen bestimmten Untersteuereinrichtung dazu konfiguriert ist, die zumindest eine bestimmte Untersteuereinrichtung selbstständig mit der von der Hauptsteuereinrichtung empfangenen Software betriebsfähig zu programmieren, wobei das Grundmodul unverändert bleibt.

Gemäß der Erfindung ist eine Prüfung einer Hardwareversion zumindest einer der programmierbaren Untersteuereinrichtungen mithilfe einer Prüfeinrichtung vorgesehen, wobei die Hauptsteuereinrichtung dazu konfiguriert ist, eine Mehrzahl von Betriebsmodulen mit unterschiedlichem Versionsstand für eine bestimmte Untersteuereinrichtung vorhaltend zu speichern und, falls die bestimmte Untersteuereinrichtung als programmierbar ermittelt wird, ein für eine ermittelte Hardwareversion geeignetes Betriebsmodul an die bestimmte Untersteuereinrichtung zu übertragen. Falls die bestimmte Untersteuereinrichtung als nicht programmierbar ermittelt wird, dann erfolgen ein Überspringen der bestimmten Untersteuereinrichtung und ein Übergang zu einer nächsten zu untersuchenden Untersteuereinrichtung.

Bevorzugte Ausgestaltungen eines zugrunde liegenden Systems sind in den weiteren Unteransprüchen angegeben.

Die Erfindung wird nachstehend anhand eines bevorzugten Ausführungsbeispiels unter Bezugnahme auf die Zeichnung näher beschrieben. Es zeigen:
- **Fig. 1**: eine vereinfachte, ausschnittsweise Prinzipdarstellung eines elektronischen Bremssystems für Zugfahrzeuge, in welchem das System zur Verteilung und/oder Aktualisierung von Software in vernetzten Steuereinrichtungen eines Fahrzeugs gemäß einem Ausführungsbeispiel anwendbar ist; und
- **Fig. 2**: ein vereinfachter Abriss des Verfahrens zur Verteilung und/oder Aktualisierung von Software in vernetzten Steuereinrichtungen eines Fahrzeugs gemäß dem Ausführungsbeispiel.

Es wird angemerkt, dass in der Zeichnung äquivalente oder gleichwirkende Elemente dieselben Bezugszeichen tragen können und in diesem Fall jeweils nicht nochmals beschrieben werden.

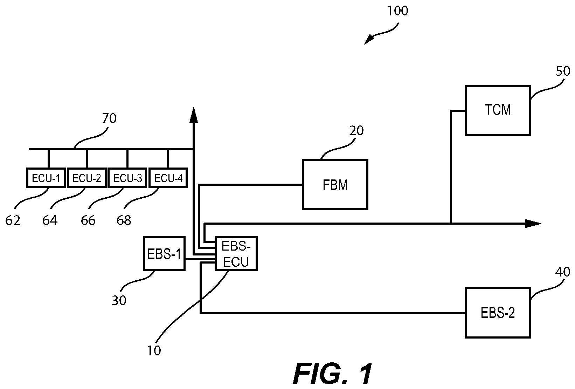

**Fig. 1** zeigt eine vereinfachte, ausschnittsweise Prinzipdarstellung eines elektronischen Bremssystems (EBS) **100** für Zugfahrzeuge, in welchem das System zur Verteilung und/oder Aktualisierung von Software in vernetzten Steuereinrichtungen eines Fahrzeugs gemäß einem Ausführungsbeispiel anwendbar ist. Ausschnittsweise bedeutet, dass nicht alle Komponenten eines vollständigen und dem Fachmann an sich bekannten elektronischen Bremssystems dargestellt sind, sondern zur Beschreibung des vorliegenden Ausführungsbeispiels nicht erforderliche Teile aus Gründen besserer Übersichtlichkeit weggelassen sind.

Im Wesentlichen beinhaltet das EBS **100** unter anderem beispielsweise ein EBS-Elektronisches Steuergerät **10** (EBS-ECU), ein EBS-Fußbremsmodul **20** (FBM), ein EBS-Einkanalmodul **30** (EBS-1), ein EBS-Zweikanalmodul 40 (EBS-2), ein Anhängersteuermodul **50** (TCM), und eine Vielzahl von elektronischen Steuereinheiten für andere Einrichtungen eines Zugfahrzeugs, wie beispielsweise eine zentrale elektronische Steuereinheit **62** (ECU-1), eine elektronische Steuereinheit für einen Motor **64** (ECU-2), eine elektronische Steuereinheit für ein Getriebe **66** (ECU-3), und eine elektronische Steuereinheit für einen Retarder **68** (ECU-4). Die vorgenannten Geräte und Einheiten sind als Module des EBS über beispielsweise einen CAN-Bus **70** miteinander verbunden und können über diesen in an sich bekannter Weise kommunizieren und signalisieren.

Zumindest die vorgenannten Geräte und Einheiten, Einrichtungen und Komponenten können grundlegend zumindest Teil eines Systems zur Verteilung und/oder Aktualisierung von Software in vernetzten Steuereinrichtungen bilden. Die einzelnen Module sind dabei in der Regel mit eigener Intelligenz in Form beispielsweise direkt an bzw. in einem jeweiligen Modul aufgenommener Elektronik versehen, die in an sich bekannter Weise zumindest einen Mikroprozessor, Controller, Speicher in Form von RAM, ROM usw., Eingabe/Ausgabe-Schnittstellen, Anschlüsse für Sensoren und dergleichen, beinhalten und in dem Speicher abgelegte Software und Daten ausführen und verarbeiten kann.

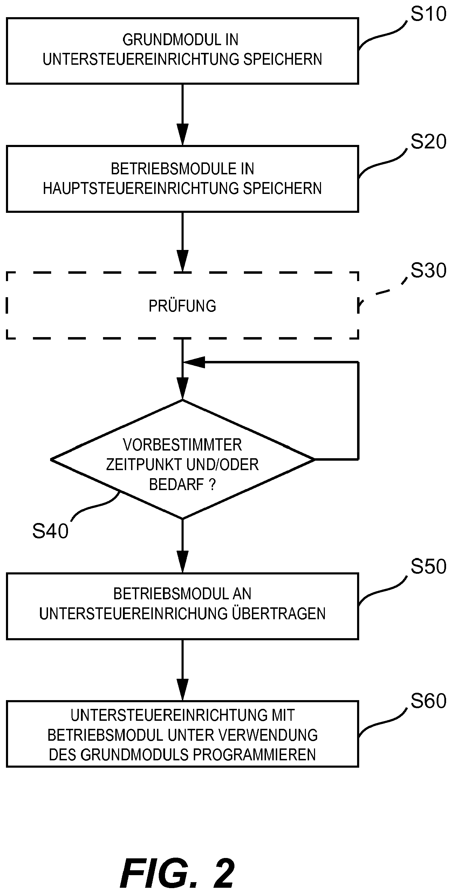

**Fig. 2** zeigt in Verbindung mit **Fig. 1** einen vereinfachten Abriss des Verfahrens zur Verteilung und/oder Aktualisierung von Software in vernetzten Steuereinrichtungen eines Fahrzeugs gemäß dem Ausführungsbeispiel.

Gemäß diesem Ausführungsbeispiel ist darüber hinaus vorgesehen, dass in einem Auslieferungszustand bzw. werksseitigen Zustand in dem Speicher einer jeweiligen Untersteuereinrichtung nur eine Grundsoftware, beispielsweise in Form eines Bootladers, abgelegt wird **(S10** in **Fig. 2****),** die dazu dient, grundlegende Funktionalität wie beispielsweise zur Initialisierung, grundlegenden Prüfung und Einstellung, und Laden von Betriebssoftware bereitzustellen. Die Betriebssoftware kann dabei modulförmig als Betriebs(software)module bereitgestellt sein.

Praktische und/oder tatsächliche Funktionalität wird sodann wie herstellerseitig gewünscht und vorgesehen durch Ausführen bzw. Abarbeiten der Betriebsmodule und der in diesen programmierten Funktionen, Reaktionen und Verhaltensweisen erhalten. In anderen Worten sind in einem werksseitigen Zustand oder Auslieferungszustand, beispielsweise zu Austausch- und Ersatzzecken, diese Geräte und Einheiten, Einrichtungen und Komponenten softwaremäßig nur minimal bestückt, und muss eigentliche Betriebssoftware vor einer praktischen Verwendbarkeit zuerst in diese installiert bzw. programmiert werden.

Insoweit bilden diese Geräte und Einheiten, Einrichtungen und Komponenten eine Vielzahl von programmierbaren Untersteuereinrichtungen, die Teil eines vernetzten Systems von Steuereinrichtungen bilden und jeweils einen ersten Speicherbereich aufweisen, der zumindest ein werksseitig vorprogrammiertes Grundmodul zur Initialisierung und Programmierung der Untereinrichtung speichert.

Eine(s) der vorgenannten Geräte und Einheiten, Einrichtungen und Komponenten, beispielsweise die zentrale elektronische Steuereinheit **62** (ECU-1) oder eine über den CAN-Bus **70** anbindbare externe Zentraleinrichtung (Server, Zentrale), die gegenüber dem EBS als eine elektronische Steuereinrichtung auftritt, kann dazu bestimmt sein, Software in Form von Betriebsmodulen für alle anderen programmierbaren Steuereinrichtungen (Geräte und Einheiten, Einrichtungen und Komponenten) des EBS gespeichert vorzuhalten **(S20** in **Fig. 2****).** Die vorgehaltene Software kann dabei bevorzugt für jede programmierbare Steuereinrichtung eine aktuellste Version eines Betriebsmoduls und/oder verschiedene Versionsstände beinhalten, so dass es beispielsweise in einem Austauschfall, in dem eine neueste Steuereinrichtung bzw. neueste Hardwareversion nicht zur Verfügung steht, oder regional unterschiedliche Anforderungen zu erfüllen sind, möglich ist, eine neu zu verbauende Steuereinrichtung mit der jeweils geeigneten Software zu versehen und zu programmieren. Insoweit bildet die beispielhaft genannte zentrale elektronische Steuereinheit **62** (ECU-1), ohne auf diese beschränkt zu sein, zumindest eine Hauptsteuereinrichtung, die ebenfalls Teil des vernetzten Teilsystems von Steuereinrichtungen bildet, und einen zweiten Speicherbereich aufweist, der werksseitig vorprogrammierte Betriebsmodule für alle der Vielzahl von programmierbaren Untersteuereinrichtungen des vernetzten Teilsystems speichert.

In diesem Fall ist diese Hauptsteuereinrichtung dazu konfiguriert, zu einem vorbestimmten und/oder bedarfsweise Zeitpunkt Software, die für zumindest eine bestimmte der Vielzahl von programmierbaren Untersteuereinrichtungen vorgesehen ist, selbstständig an die zumindest eine bestimmte Untersteuereinrichtung zu übertragen. Ein vorbestimmter Zeitpunkt kann dabei beispielsweise ein Wartungszeitpunkt, in dem eine Softwareaktualisierung auf neueren Stand erfolgen soll, ein Diagnosezeitpunkt, in dem fehlerhaft gewordene Software neu aufgespielt und eine Komponente in einen definierten Zustand versetzt werden soll, oder ein Reparaturzeitpunkt, in dem eine insgesamt fehlerhaft gewordene Komponente durch eine Austauschkomponente ersetzt werden soll, sein. Ein vorbestimmter Zeitpunkt kann darüber hinaus ein immer wieder auftretender Zeitpunkt sein, beispielsweise ein Einschalten oder Hochfahren des zugrunde liegenden Systems, bei dem für einen definierten Ausgangszustand zumindest eines/einige/alle Untersteuereinrichtungen neu programmiert werden. Eine solche wiederholte bzw. regelmäßige Neuprogrammierung kann dann auch sogleich Rückmeldungen über Fehlerfälle liefern, beispielsweise wenn eine Neuprogrammierung einer bestimmten Komponente scheitert.

Im Einzelnen erfolgt die Programmierung eines Betriebsmoduls in einer Untersteuerkomponente mithilfe des Grundmoduls derselben, das eine jeweilige Untersteuereinrichtung zunächst initiiert und in einen programmierbaren Zustand versetzt, und nach Empfang zumindest eines Betriebsmoduls von der Hauptsteuereinrichtung die gesamte Untersteuereinrichtung selbstständig mit der von der Hauptsteuereinrichtung empfangenen Software betriebsfähig programmiert.

Eine Entscheidung, was wie bzw. wohin zu programmieren ist, kann mithilfe einer Prüfeinrichtung (**S30** in **Fig. 2****)** ermittelt werden, die dazu konfiguriert ist, zu dem vorbestimmten Zeitpunkt zu prüfen, ob alle der programmierbaren Untersteuereinrichtungen bereits betriebsfähig und/oder mit einem vorbestimmten Softwarestand programmiert sind, und in Abhängigkeit von dem Ergebnis der Prüfung eine selbstständige Programmierung nicht betriebsfähig und/oder nicht mit einem vorbestimmten Softwarestand programmierter Untereinrichtungen für Betriebsfähigkeit und/oder zur Aktualisierung auf einen vorbestimmten Softwarestand auszulösen. Die Prüfeinrichtung kann dabei optional vorgesehen sein, wie durch einen durchbrochenen Rahmen bei **S30** in **Fig. 2** angedeutet.

Falls die Prüfeinrichtung in der Hauptsteuereinrichtung angeordnet ist, ist sie dazu konfiguriert, eine zu programmierende Untersteuereinrichtung und/oder relevante Information über diese zu ermitteln und eine Übertragung zumindest eines für die ermittelte Untersteuereinrichtung bestimmten Betriebsmoduls an dieselbe zu veranlassen. In anderen Worten fragt die Prüfeinrichtung bzw. eine entsprechende Routine in der Hauptsteuereinrichtung beispielsweise Parameter wie etwa Softwareversionsstand und Hardwareversion der Untersteuereinrichtung ab und ermittelt aus den in der Hauptsteuereinrichtung vorgehalten gespeicherten Betriebsmodulen dasjenige oder diejenigen, die für diese Untersteuereinrichtung geeignet sind. Nach erfolgter Prüfung kann die Hauptsteuereinrichtung, falls Programmierbedarf festgestellt wurde, ein ermitteltes Modul selbsttätig an die Untersteuereinrichtung übertragen **(S50** in **Fig. 2****).**

Die Übertragung kann dabei mittels Kommunikation und Signalisierung über den CAN-Bus 70 erfolgen, und die Untersteuereinrichtung legt das empfangene Modul in ihrem (ersten) Speicher ab bzw. installiert/programmiert das Modul lauffähig in der Untersteuereinrichtung **(S60** in **Fig. 2****).** Eine Beschränkung auf nur ein Modul besteht selbstverständlich nicht, sondern es können mehrere Module bis hin zur gesamten Software der Untersteuereinrichtung ermittelt und übertragen werden, oder einzelne Module innerhalb einer komplexeren Softwarestruktur bereitgestellt werden.

Alternativ kann die Prüfeinrichtung in jeder der Untersteuereinrichtungen angeordnet sein und dazu konfiguriert sein, die Notwendigkeit bzw. den Bedarf einer zumindest teilweisen (Neu-bzw. Um-)Programmierung der Untersteuereinrichtung, in der sie angeordnet ist, zu ermitteln und eine Übertragung zumindest eines für diese Untersteuereinrichtung bestimmten Betriebsmoduls von der Hauptsteuereinrichtung anzufordern. Nach erfolgter Prüfung kann die Hauptsteuereinrichtung, falls eines oder mehrere Betriebsmodule von der Untersteuereinrichtung angefordert wurden, ein oder mehrere angeforderte Module bereitstellen und selbsttätig an die Untersteuereinrichtung übertragen. Die Übertragung kann dabei mittels Kommunikation und Signalisierung über den CAN-Bus **70** erfolgen, und die Untersteuereinrichtung legt das empfangene Modul in ihrem (ersten) Speicher ab bzw. installiert das Modul lauffähig in der Untersteuereinrichtung. Eine Beschränkung auf nur ein Modul besteht selbstverständlich nicht, sondern es können mehrere Module bis hin zur gesamten Software der Untersteuereinrichtung ermittelt und übertragen werden, oder einzelne Module innerhalb einer komplexeren Softwarestruktur bereitgestellt werden

Im Rahmen der vorgenannten Prüfungen kann darüber hinaus eine Prüfung einer Hardwareversion zumindest einer der programmierbaren Untersteuereinrichtungen erfolgen. Die Hauptsteuereinrichtung speichert in diesem Zusammenhang vorhaltend eine Mehrzahl von Betriebsmodulen mit unterschiedlichem Versionsstand für eine bestimmte Untersteuereinrichtung. Falls die bestimmte Untersteuereinrichtung als programmierbar ermittelt ist, überträgt die Hauptsteuereinrichtung ein für eine ermittelte Hardwareversion geeignetes Betriebsmodul an die bestimmte Untersteuereinrichtung.

Vor dem Hintergrund einer verbesserten Aufrechterhaltung von Kompatibilität und Betriebsfähigkeit kann die Prüfung der Hardwareversion bevorzugt zusätzlich oder optional eine Art Gegenprüfung beinhalten, bei der dann, wenn beispielsweise die Untersteuereinrichtung ein bestimmtes Betriebsmodul anfordert, die Hauptsteuereinrichtung anhand eigenen Datenbestands prüft, ob die Anforderung durch die Untersteuereinrichtung den korrekten Betrieb der Untersteuereinrichtung gewährleistet und Kompatibilitätsanforderungen erfüllt.

Des Weiteren kann ein Zustand eintreten, in dem beispielsweise das vernetzte Teilsystem nicht oder nicht mehr wie vorgesehen arbeitet. In diesem Fall ist in diesem Ausführungsbeispiel vorgesehen, dass die Hauptsteuereinrichtung die Möglichkeit hat, zumindest eine der programmierbaren Untersteuereinrichtungen zu jedem vorbestimmten Zeitpunkt unbedingt zu programmieren. In anderen Worten wird eine Funktion dahin gehend bereitgestellt, den gesamten von der Hauptsteuereinrichtung erreichbaren und programmierbaren Systemteil, oder zumindest einen Abschnitt desselben, definiert mit dem jeweils neuesten und/oder zumindest geeigneten Softwarestand neu einzurichten, das heißt in einen definierten Zustand zu versetzen. Dies kann beispielsweise durch eine Bereitstellung freier Speicherstellen im Sinne etwa einer sogenannten Überprovisionierung unterstützt werden, so dass Fehlerzustände und undefinierte Zustände, die auf fehlerhaften Speicher zurückzuführen sind und eine solche Neuprogammierung auslösen können, auf einfache Art und Weise beseitigt werden können und die Betriebsfähigkeit zumindest vorerst wieder hergestellt werden kann.

Der vorbestimmte Zeitpunkt kann auch ein Einschaltzeitpunkt des vernetzten Systems von programmierbaren Untersteuereinrichtungen sein. In diesem Fall kann vorgesehen sein, dass die Hauptsteuereinrichtung zu diesem Einschaltzeitpunkt alle der programmierbaren Untersteuereinrichtungen programmiert. Der Einschaltzeitpunkt kann auch ein Einschaltzeitpunkt zumindest einer der programmierbaren Untersteuereinrichtungen sein, in welchem Fall die Hauptsteuereinrichtung dann dazu konfiguriert sein kann, zu diesem Einschaltzeitpunkt nur bzw. genau die zumindest eine der programmierbaren Untersteuereinrichtungen zu programmieren.

Alternativ ist die Möglichkeit vorgesehen, durch die Hauptsteuereinrichtung und/oder zumindest eine der programmierbaren Untersteuereinrichtungen eine Programmierung der zumindest einen der programmierbaren Untersteuereinrichtungen auf eine Anweisung im Rahmen eines laufenden Systemdiagnoseprozesses durchzuführen.

Die vorgenannten Programmierungen zu einem bestimmten Zeitpunkt oder je nach Bedarf werden vorzugsweise in **S40** in **Fig. 2****,** der beispielsweise in einer Schleife durchlaufen wird **(S40:** NEIN), bis ein vorbestimmter Zeitpunkt und/oder ein Bedarf erfasst wird (**S40:** JA) auf Grundlage entsprechender Abfragen ermittelt, ausgelöst und/oder realisiert.

Wie vorstehend beschrieben wurde, beinhaltet ein Verfahren zur Verteilung und/oder Aktualisierung von Software in vernetzten Steuereinrichtungen, beispielsweise solchen eines Kraftfahrzeugs, ein Speichern zumindest eines werksseitig vorprogrammierten Grundmoduls zur Initialisierung und Programmierung einer von einer Vielzahl von programmierbaren Untersteuereinrichtungen, die Teil eines vernetzten Systems von Steuereinrichtungen bilden, in jeweils einem ersten Speicherbereich jeder Untersteuereinrichtung, ein Speichern von werksseitig vorprogrammierten Betriebsmodulen für alle der Vielzahl von programmierbaren Untersteuereinrichtungen des vernetzten Teilsystems in zumindest einer Hauptsteuereinrichtung, die ebenfalls Teil des vernetzten Teilsystems von Steuereinrichtungen bildet, in einem zweiten Speicherbereich der Hauptsteuereinrichtung, zu einem vorbestimmten Zeitpunkt und/oder bedarfsweise ein Übertragen zumindest eines Betriebsmoduls, das für zumindest eine bestimmte der Vielzahl von programmierbaren Untersteuereinrichtungen vorgesehen ist, selbstständig von der Hauptsteuereinrichtung an die zumindest eine bestimmte Untersteuereinrichtung, und ein selbstständiges und betriebsfähiges Programmieren der zumindest einen bestimmten Untersteuereinrichtung mit dem von der Hauptsteuereinrichtung empfangenen zumindest einen Betriebsmodul unter Verwendung des Grundmoduls. Ein zugrunde liegendes System kann ein elektronisches Bremssystem eines Fahrzeugs sein, in dem die Hauptsteuereinrichtung eine Zentrale und/oder eine Mastereinrichtung bildet, die über einen CAN-Bus als Netzwerk mit zumindest einem Raddruckregelmodul (EPM), einem Fußbremsmodul (FBM) und/oder einem Anhängersteuermodul (TCM) als programmierbare Untersteuereinrichtungen, die jeweils Slaveeinrichtungen bilden, verbunden ist.

Vorteilhaft beinhaltet dabei das vorstehend beschriebene Verfahren auch ein Verfahren zur Verteilung und/oder Aktualisierung von Software und/oder Parametern in vernetzten Steuereinrichtungen, da im Rahmen des beschriebenen Ausführungsbeispiels in analoger Weise auch eine Verteilung bzw. Aktualisierung, Speicherung, Übertragung, Initialisierung und/oder Programmierung zugrunde liegender, verwendeter und/oder zu übergebender Parameter durchführbar ist, so dass dann, wenn sich beispielsweise eine Parameterstruktur von einer Software bzw. einem Versionsstand zu einer/einem anderen ändert, nicht nur die Software selbst, sondern auch (gleichzeitig oder nur) die entsprechenden Parameter aktualisierbar sind.

Modifikationen, die zu der detaillierten Beschreibung der Erfindung hierin ähnlich sind, sind für den Fachmann ohne Weiteres ersichtlich und sind daher nicht als Abweichen vom Gegenstand der Erfindung wie in den nachfolgenden Patentansprüchen definiert zu werten. Insbesondere beinhaltet der in den Patentansprüchen verwendete Begriff der "Software" grundlegend sowohl Software an sich, d. h. Programmteile, Code, Module, Betriebsmodule und dergleichen, als auch Parameter mit zumindest jeweils Zugehörigkeit und/oder vorbestimmtem, entsprechendem oder geeignetem Bezug dazu.

### BEZUGSZEICHENLISTE

- 10: EBS-Elektronisches Steuergerät (EBS-ECU)
- 20: EBS-Fußbremsmodul 20 (FBM)
- 30: EBS-Einkanalmodul 30 (EBS-1)
- 40: EBS-Zweikanalmodul 40 (EBS-2)
- 50: Anhängersteuermodul 50 (TCM)
- 62: zentrale elektronische Steuereinheit (ECU-1)
- 64: elektronische Motorsteuereinheit (ECU-2)
- 66: elektronische Getriebesteuereinheit (ECU-3)
- 68: elektronische Retardersteuereinheit (ECU-4)
- 70: CAN-Bus
- 100: elektronisches Bremssystem (EBS)

- S10: Speicherschritt
- S20: Speicherschritt
- S30: Prüfschritt
- S40: Ermittlungsschritt
- S50: Übertragungsschritt
- S60: Programmierschritt

## Patentansprüche

1. Verfahren zur Verteilung und/oder Aktualisierung von Software in vernetzten Steuereinrichtungen eines Kraftfahrzeugs, beinhaltend die Schritte:
Speichern zumindest eines werksseitig vorprogrammierten Grundmoduls zur Initialisierung und Programmierung einer von einer Vielzahl von programmierbaren Untersteuereinrichtungen, die Teil eines vernetzten Systems von Steuereinrichtungen bilden, in jeweils einem ersten Speicherbereich jeder Untersteuereinrichtung; **gekennzeichnet durch**
Speichern von werksseitig vorprogrammierter Software in Form von Betriebsmodulen für alle der Vielzahl von programmierbaren Untersteuereinrichtungen des vernetzten Teilsystems in zumindest einer Hauptsteuereinrichtung, die ebenfalls Teil des vernetzten Teilsystems von Steuereinrichtungen bildet, in einem zweiten Speicherbereich der Hauptsteuereinrichtung;
zu einem vorbestimmten Zeitpunkt und/oder bedarfsweise Übertragen zumindest eines Betriebsmoduls, das für zumindest eine bestimmte der Vielzahl von programmierbaren Untersteuereinrichtungen vorgesehen ist, selbstständig von der Hauptsteuereinrichtung an die zumindest eine bestimmte Untersteuereinrichtung; und
selbstständiges und betriebsfähiges Programmieren der zumindest einen bestimmten Untersteuereinrichtung mit dem von der Hauptsteuereinrichtung empfangenen zumindest einen Betriebsmodul unter Verwendung des Grundmoduls,
Prüfen einer Hardwareversion zumindest einer programmierbaren Untersteuereinrichtungen mithilfe einer in der Hauptsteuereinrichtung angeordneten Prüfeinrichtung, wobei die Hauptsteuereinrichtung dazu konfiguriert ist, eine Mehrzahl von Betriebsmodulen mit unterschiedlichem Versionsstand für eine bestimmte Untersteuereinrichtung vorhaltend zu speichern;
und falls die bestimmte Untersteuereinrichtung als programmierbar ermittelt wird, Übertragen eines für eine ermittelte Hardwareversion geeigneten Betriebsmoduls an die bestimmte Untersteuereinrichtung,
und falls die bestimmte Untersteuereinrichtung als nicht programmierbar ermittelt wird, Überspringen der bestimmten Untersteuereinrichtung und Übergang zu einer nächsten zu untersuchenden Untersteuereinrichtung.

2. Verfahren nach Anspruch 1, **gekennzeichnet durch** den Schritt des
Prüfens mittels einer Prüfeinrichtung zu dem vorbestimmten Zeitpunkt, ob alle der programmierbaren Untersteuereinrichtungen bereits betriebsfähig und/oder mit einem vorbestimmten Softwarestand programmiert sind, und in Abhängigkeit von dem Ergebnis der Prüfung Auslösen eines selbstständigen Programmierens nicht betriebsfähig und/oder nicht mit einem vorbestimmten Softwarestand programmierter Untereinrichtungen für Betriebsfähigkeit und/oder zur Aktualisierung auf einen vorbestimmten Softwarestand.

3. Verfahren nach Anspruch 2, **dadurch gekennzeichnet, dass**
die Prüfung in der Hauptsteuereinrichtung durchgeführt wird, wobei eine zu programmierende Untersteuereinrichtungen ermittelt und eine Übertragung zumindest eines von für die ermittelte Untersteuereinrichtung bestimmten Betriebsmoduls an dieselbe veranlasst wird.

4. Verfahren nach Anspruch 2, **dadurch gekennzeichnet, dass**
die Prüfung in jeder der Untersteuereinrichtungen durchgeführt wird, wobei eine Notwendigkeit einer Programmierung der Untersteuereinrichtung, in der sie durchgeführt wird, ermittelt und eine Übertragung zumindest eines von für diese Untersteuereinrichtung bestimmten Betriebsmoduls von der Hauptsteuereinrichtung angefordert wird.

5. Verfahren nach Anspruch 1, **gekennzeichnet durch** den Schritt des
unbedingten Programmierens zumindest einer der programmierbaren Untersteuereinrichtungen zu jedem vorbestimmten Zeitpunkt.

6. Verfahren nach Anspruch 5, **dadurch gekennzeichnet, dass**
der vorbestimmte Zeitpunkt ein Einschaltzeitpunkt des vernetzten Systems von programmierbaren Untersteuereinrichtungen ist und zu diesem Einschaltzeitpunkt alle der programmierbaren Untersteuereinrichtungen programmiert werden, oder ein Einschaltzeitpunkt zumindest einer der programmierbaren Untersteuereinrichtungen ist und zu diesem Einschaltzeitpunkt die zumindest eine der programmierbaren Untersteuereinrichtungen programmiert wird.

7. Verfahren nach Anspruch 1, **dadurch gekennzeichnet, dass**
eine Programmierung der zumindest einen der programmierbaren Untersteuereinrichtungen auf eine Anweisung im Rahmen eines laufenden Systemdiagnoseprozesses durch die Hauptsteuereinrichtung und/oder zumindest eine der programmierbaren Untersteuereinrichtungen durchgeführt wird.

8. Verfahren nach Anspruch 1, **dadurch gekennzeichnet, dass** das Grundmodul eine kleinste Softwareeinheit und/oder ein Bootlader ist.

9. Verfahren nach einem der vorangehenden Ansprüche, **dadurch gekennzeichnet, dass** die Verfahrensschritte in einem Netzwerk auf der Grundlage eines CAN-Busses durchgeführt werden.

10. Verfahren nach einem der vorangehenden Ansprüche, **dadurch gekennzeichnet, dass** die Verfahrensschritte in einem elektronischen Bremssystem eines Fahrzeugs durchgeführt werden, in dem die Hauptsteuereinrichtung eine Zentrale und/oder eine Mastereinrichtung bildet, und in dem zumindest ein Raddruckregelmodul (EPM), ein Fußbremsmodul (FBM) und/oder ein Anhängersteuermodul (TCM) als programmierbare Untersteuereinrichtungen konfiguriert sind und jeweils Slaveeinrichtungen bilden.

11. System zur Verteilung und/oder Aktualisierung von Software in vernetzten Steuereinrichtungen eines Kraftfahrzeugs, beinhaltend_
eine Vielzahl von programmierbaren Untersteuereinrichtungen, die Teil eines vernetzten Systems von Steuereinrichtungen bilden und jeweils einen ersten Speicherbereich aufweisen, der zumindest ein werksseitig vorprogrammiertes Grundmodul zur Initialisierung und Programmierung der Untersteuereinrichtung speichert;
zumindest eine Hauptsteuereinrichtung, die ebenfalls Teil des vernetzten Teilsystems von Steuereinrichtungen bildet, **dadurch gekennzeichnet, dass** die Hauptsteuereinrichtung einen zweiten Speicherbereich aufweist, der werksseitig vorprogrammierte Software in Form von Betriebsmodulen für alle der Vielzahl von programmierbaren Untersteuereinrichtungen des vernetzten Teilsystems speichert, wobei
die Hauptsteuereinrichtung dazu konfiguriert ist, zu einem vorbestimmten und/oder bedarfsweisen Zeitpunkt Software, die für zumindest eine bestimmte der Vielzahl von programmierbaren Untersteuereinrichtungen vorgesehen ist, selbstständig an die zumindest eine bestimmte Untersteuereinrichtung zu übertragen, und
das Grundmodul der zumindest einen bestimmten Untersteuereinrichtung dazu konfiguriert ist, die zumindest eine bestimmte Untersteuereinrichtung selbstständig mit der von der Hauptsteuereinrichtung empfangenen Software betriebsfähig zu programmieren, und
eine Prüfung einer Hardwareversion zumindest einer der programmierbaren Untersteuereinrichtungen mithilfe einer in der Hauptsteuereinrichtung angeordneten Prüfeinrichtung vorgesehen ist, wobei die Hauptsteuereinrichtung dazu konfiguriert ist,
eine Mehrzahl von Betriebsmodulen mit unterschiedlichem Versionsstand für eine bestimmte Untersteuereinrichtung vorhaltend zu speichern,
und falls bestimmte Untersteuereinrichtung als programmierbar ermittelt wird, ein für eine ermittelte Hardwareversion geeignetes Betriebsmodul an die bestimmte Untersteuereinrichtung übertragen,
und falls die bestimmte Untersteuereinrichtung als nicht programmierbar ermittelt wird, Überspringen der bestimmten Untersteuereinrichtung und Übergang zu einer nächsten zu untersuchenden Untersteuereinrichtung.

12. System nach Anspruch 11, **gekennzeichnet durch**
eine Prüfeinrichtung, die dazu konfiguriert ist, zu dem vorbestimmten Zeitpunkt zu prüfen, ob alle der programmierbaren Untersteuereinrichtungen bereits betriebsfähig und/oder mit einem vorbestimmten Softwarestand programmiert sind, und in Abhängigkeit von dem Ergebnis der Prüfung eine selbstständige Programmierung nicht betriebsfähig und/oder nicht mit einem vorbestimmten Softwarestand programmierter Untersteuereinrichtungen für Betriebsfähigkeit und/oder zur Aktualisierung auf einen vorbestimmten Softwarestand auszulösen.

13. System nach Anspruch 12, **dadurch gekennzeichnet, dass**
die Prüfeinrichtung dazu konfiguriert ist, eine zu programmierende Untersteuereinrichtungen zu ermitteln und eine Übertragung zumindest eines für die ermittelte Untersteuereinrichtung bestimmten Betriebsmoduls an dieselbe zu veranlassen.

14. System nach Anspruch 11, **dadurch gekennzeichnet, dass**
die Hauptsteuereinrichtung dazu konfiguriert ist, zumindest eine der programmierbaren Untersteuereinrichtungen zu jedem vorbestimmten Zeitpunkt unbedingt zu programmieren.

15. System nach Anspruch 14, **dadurch gekennzeichnet, dass**
der vorbestimmte Zeitpunkt ein Einschaltzeitpunkt des vernetzten Systems von programmierbaren Untersteuereinrichtungen ist und die Hauptsteuereinrichtung dazu konfiguriert ist, zu diesem Einschaltzeitpunkt alle der programmierbaren Untersteuereinrichtungen zu programmieren, oder ein Einschaltzeitpunkt zumindest einer der programmierbaren Untersteuereinrichtungen ist und die Hauptsteuereinrichtung dazu konfiguriert ist, zu diesem Einschaltzeitpunkt die zumindest eine der programmierbaren Untersteuereinrichtungen zu programmieren.

16. System nach Anspruch 11, **dadurch gekennzeichnet, dass**
die Hauptsteuereinrichtung und/oder zumindest eine der programmierbaren Untersteuereinrichtungen dazu angeordnet sind, eine Programmierung der zumindest einen der programmierbaren Untersteuereinrichtungen auf eine Anweisung im Rahmen eines laufenden Systemdiagnoseprozesses durchzuführen.

17. System nach Anspruch 11, **dadurch gekennzeichnet, dass**
Das Grundmodul eine kleinste Softwareeinheit und/oder ein Bootlader ist.

18. System nach einem der Ansprüche 11 bis 17, **dadurch gekennzeichnet, dass**
das System ein elektronisches Bremssystem eines Fahrzeugs ist und die Hauptsteuereinrichtung eine Zentrale und/oder eine Mastereinrichtung bildet, die über einen CAN-Bus als Netzwerk mit zumindest einem Raddruckregelmodul (EPM), einem Fußbremsmodul (FBM) und/oder einem Anhängersteuermodul (TCM) als programmierbare Untersteuereinrichtungen, die jeweils Slaveeinrichtungen bilden, verbunden ist.

## Claims

1. Method for distributing and/or updating software in networked control devices, comprising the steps of:
storing at least one factory-preprogrammed base module for initialising and programming one from a multiplicity of programmable secondary control devices, which form part of a networked system of control devices, in a respective first memory area of each secondary control device; **characterised by**
storing factory-preprogrammed software in the form of operating modules for all of the multiplicity of programmable secondary control devices of the networked subsystem in at least one primary control device, which likewise forms part of the networked subsystem of control devices, in a second memory area of the primary control device;
transmitting at least one operating module, provided for at least one determined instance of the multiplicity of programmable secondary control devices, independently from the primary control device to the at least one determined secondary control device at a predetermined time and/or as required; and
programming the at least one determined secondary control device independently and for operational capability with the at least one operating module received from the primary control device using the base module;
checking a hardware version of at least one programmable secondary control device by means of a checking device, wherein the primary control device is configured to store a multiplicity of operating modules with different version release for a defined secondary control device in an available manner;
and, if the determined secondary control device is ascertained as being programmable, transmitting an operating module suitable for an ascertained hardware version to the defined secondary control device,
and, if the determined secondary control device is ascertained as being non-programmable, skipping the determined secondary control device and transition to a secondary control device which is to be checked next.

2. Method according to claim 1, **characterised by** the step of:
checking, by means of a checking device at the predetermined time, whether all of the programmable secondary control devices are already programmed for operational capability and/or with a predetermined software release, and, on the basis of the result of the check, triggering independent programming of secondary devices that are not programmed for operational capability and/or not programmed with a predetermined software release for operational capability and/or for update to a predetermined software release.

3. Method according to claim 2, **characterised in that**
the check is performed in the primary control device, wherein a secondary control devices to be programmed is ascertained and a transmission of at least one operating module determined for the ascertained secondary control device to said operating module is prompted.

4. Method according to claim 2, **characterised in that**
the check is performed in each of the secondary control devices, wherein a need for programming of the secondary control device in which it is performed is ascertained and a transmission of at least one operating module determined for this secondary control device is requested by the primary control device.

5. Method according to claim 1, **characterised by** the step of:
unconditionally programming at least one of the programmable secondary control devices at each predetermined time.

6. Method according to claim 5, **characterised in that**
the predetermined time is a switch-on time of the networked system of programmable secondary control devices and all of the programmable secondary control devices are programmed at this switch-on time, or is a switch-on time of at least one of the programmable secondary control devices and the at least one of the programmable secondary control devices is programmed at this switch-on time.

7. Method according to claim 1, **characterised in that**
a programming of the at least one of the programmable secondary control devices is performed by the primary control device and/or at least one of the programmable secondary control devices upon an instruction as part of an ongoing system diagnosis process.

8. Method according to claim 1, **characterised in that**
the base module is a smallest software unit and/or a boot loader.

9. Method according to any of the preceding claims, **characterised in that** the method steps are performed in a network on the basis of a CAN bus.

10. Method according to any of the preceding claims, **characterised in that**
the method steps are performed in an electronic brake system of a vehicle in which the primary control device forms a control centre and/or a master device, and in which at least one wheel pressure control module (EPM), a foot brake module (FBM) and/or a trailer control module (TCM) are configured as programmable secondary control devices and each form slave devices.

11. System for distributing and/or updating software in networked control devices,, comprising:
a multiplicity of programmable secondary control devices that form part of a networked system of control devices and each have a first memory area that stores at least one factory-preprogrammed base module for initialising and programming the secondary device;
at least one primary control device that likewise forms part of the networked subsystem of control devices, **characterised in that** the primary control device has a second memory area that stores factory-preprogrammed software in the form of operating modules for all of the multiplicity of programmable secondary control devices of the networked subsystem, wherein
the primary control device is configured to transmit software provided for at least one determined instance of the multiplicity of programmable secondary control devices independently to the at least one determined secondary control device at a predetermined and/or as-required time, and
the base module of the at least one determined secondary control device is configured to programme the at least one determined secondary control device for operational capability independently with the software received from the primary control device, and
there is provision for a check on a hardware version of at least one of the programmable secondary control devices, wherein the primary control device is configured
to store a plurality of operating modules with a different version release so as to be available for a determined secondary control device
and, if the determined secondary control device is ascertained as being programmable, transmitting an operating module suitable for an ascertained hardware version to the determined secondary control device,
and, if the determined secondary control device is ascertained as being non-programmable, skipping the determined secondary control device and transition to a secondary control device which is to be checked next.

12. System according to claim 11, **characterised by**
a checking device that is configured to check, at the predetermined time, whether all of the programmable secondary control devices are already programmed for operational capability and/or with a predetermined software release, and, on the basis of the result of the check, to trigger independent programming of secondary devices that are not programmed for operational capability and/or not programmed with a predetermined software release for operational capability and/or for update to a predetermined software release.

13. System according to claim 12, **characterised in that**
the checking device is configured to determine a secondary control device to be programmed and to prompt a transmission of at least one operating module designed for the determined secondary control device thereto.

14. System according to claim 11, **characterised in that**
the primary control device is configured to programme at least one of the programmable secondary control devices unconditionally at each predetermined time.

15. System according to claim 14, **characterised in that**
the predetermined time is a switch-on time of the networked system of programmable secondary control devices and the primary control device is configured to programme all of the programmable secondary control devices at this switch-on time, or is a switch-on time of at least one of the programmable secondary control devices and the primary control device is configured to programme the at least one of the programmable secondary control devices at this switch-on time.

16. System according to claim 11, **characterised in that**
the primary control device and/or at least one of the programmable secondary control devices are/is arranged to perform programming of the at least one of the programmable secondary control devices upon an instruction as part of an ongoing system diagnosis process.

17. System according to claim 11, **characterised in that**
the base module is a smallest software unit and/or a boot loader.

18. System according to any of claims 11 to 17, **characterised in that**
the system is an electronic brake system of a vehicle and the primary control device forms a control centre and/or a master device that is connected to at least one wheel pressure control module (EPM), a foot brake module (FBM) and/or a trailer control module (TCM) as programmable secondary control devices that each form slave devices via a CAN bus as network.

## Revendications

1. Procédé de répartition et/ou de mise à jour de logiciels dans des dispositifs de commande interconnectés d'un véhicule automobile, comprenant les stades :
on met en mémoire au moins un module de base préprogrammé en atelier, pour l'initialisation et la programmation de l'un d'une pluralité de sous-dispositifs de commande programmables, qui forment une partie d'un système interconnecté de dispositifs de commande, dans respectivement une première zone de mémoire de chaque sous-dispositif de commande ;
**caractérisé par**
la mise en mémoire de logiciels préprogrammés en atelier sous la forme de modules de fonctionnement pour tous les sous-dispositifs de commande de la pluralité de sous-dispositifs de commande programmables du système partiel interconnecté, dans au moins un dispositif de commande principal, qui forme également une partie du système partiel interconnecté de dispositifs de commande, dans une deuxième zone de mémoire du dispositif de commande principal ;
la transmission, à un instant défini à l'avance et/ou en fonction des besoins, d'au moins un module de fonctionnement, qui est prévu pour au moins l'un défini de la pluralité de sous-dispositifs de commande programmables, indépendamment du dispositif de commande principal au au moins un sous-dispositif de commande défini ; et
la programmation indépendante et apte à fonctionner du au moins un sous-dispositif de commande défini par le au moins un module de fonctionnement, reçu du dispositif de commande principal, en utilisant le module de base,
le contrôle d'une version matérielle d'au l'un moins des sous-dispositifs de commande programmables à l'aide d'un dispositif de contrôle disposé dans le dispositif de commande principal, dans lequel le dispositif de commande principal est configuré pour mettre en mémoire en avant une pluralité de modules de fonctionnement ayant un état de version différent pour un sous-dispositif de commande défini ;
et, si le sous-dispositif de commande défini est déterminé comme programmable, la transmission au sous-dispositif de commande défini d'un module de fonctionnement approprié à une version matérielle déterminée,
et, si le sous-dispositif défini est déterminé comme non programmable, le saut du sous-dispositif de commande défini et le passage à un sous-dispositif de commande prochain à étudier.

2. Procédé suivant la revendication 1, **caractérisé par** le stade du
contrôle, au moyen d'un dispositif de contrôle à un instant défini à l'avance du point de savoir si tous les sous-dispositifs de commande programmables sont déjà aptes à fonctionner et/ou programmés par un état de logiciel défini à l'avance, et en fonction du résultat du contrôle, du déclenchement, pour l'aptitude à fonctionner et/ou la mise à jour à un état de logiciel défini à l'avance, d'une programmation indépendante de sous-dispositifs inaptes à fonctionner et/ou non programmés par un état de logiciel défini à l'avance.

3. Procédé suivant la revendication 2, **caractérisé en ce que**
l'on effectue le contrôle du dispositif de commande principal, dans lequel on détermine l'un des sous-dispositifs de commande à programmer et on provoque une transmission d'au moins un module de fonctionnement défini pour le sous-dispositif de commande déterminé à ce dernier.

4. Procédé suivant la revendication 2, **caractérisé en ce que**
l'on effectue le contrôle dans chacun des sous-dispositifs de commande, dans lequel on détermine la nécessité d'une programmation du sous-dispositif de commande, dans lequel elle est effectuée, et on demande au dispositif de commande principal une transmission d'au moins un module de fonctionnement défini pour ce sous-dispositif de commande.

5. Procédé suivant la revendication 1, **caractérisé par** le stade de
la programmation inconditionnelle d'au moins l'un des sous-dispositifs de commande programmables à chaque instant défini à l'avance.

6. Procédé suivant la revendication 5, **caractérisé en ce que**
l'instant défini à l'avance est un instant de branchement du système interconnecté de sous-dispositifs de commande programmables et, à cet instant de branchement, on programme tous les sous-dispositifs de commande programmables, ou est un instant de branchement d'au moins l'un des sous-dispositifs de commande programmables et, à cet instant de branchement, on programme le au moins un des sous-dispositifs de commande programmables.

7. Procédé suivant la revendication 1, **caractérisé en ce que**
l'on effectue par le dispositif de commande principal et/ou par au moins l'un des sous-dispositifs de commande programmables, une programmation d'au moins l'un des sous-dispositifs de commande programmables sur une instruction, dans le cadre d'un processus de diagnostic de système en cours.

8. Procédé suivant la revendication 1, **caractérisé en ce que**
le module de base est une unité logicielle très petite et/ou un bootlader.

9. Procédé suivant l'une des revendications précédentes, **caractérisé en ce que**
l'on effectue les stades du procédé dans un réseau sur la base d'un bus SCAN.

10. Procédé suivant l'une des revendications précédentes, **caractérisé en ce que**
l'on effectue les stades du procédé dans un système électronique de freinage d'un véhicule, par le fait que le dispositif de commande principal forme une centrale et/ou un dispositif maître et par le fait qu'au moins un module (EPM) de réglage de la pression de roue, un module (FBM) de frein au pied et/ou un module (TCM) de commande de remorque sont configurés comme sous-dispositifs de commande programmables et forment chacun des dispositifs esclaves.

11. Système de répartition et/ou de mise à jour de logiciels dans des dispositifs de commande interconnectés d'un véhicule automobile comportant
une pluralité de sous-dispositifs de commande programmables, qui forment une partie d'un système interconnecté de dispositif de commande et qui ont chacun une première zone de mémoire, qui met, pour l'initiation à la programmation du sous-dispositif de commande, en mémoire au moins un module de base préprogrammé en atelier ;
au moins un dispositif de commande principal, qui forme également une partie du système partiel interconnecté de dispositifs de commande, **caractérisé en ce que** le dispositif de commande principal a une deuxième zone de mémoire, qui met en mémoire des logiciels préprogrammés en atelier, sous la forme de modules de fonctionnement pour tous les sous-dispositifs de la pluralité de sous-dispositifs de commande programmables du système partiel interconnecté, dans lequel
le dispositif de commande principal est configuré pour, à un instant défini à l'avance et/ou suivant les besoins, transmettre du logiciel, qui est prévu pour au moins l'un défini de la pluralité de sous-dispositifs de commande programmables, indépendamment au au moins un sous-dispositif de commande défini, et
le module de base du au moins un sous-dispositif de commande défini est configuré pour programmer, d'une manière apte à fonctionner, le au moins un sous-dispositif de commande défini indépendamment par le logiciel reçu du dispositif de commande principal, et
il est prévu un contrôle d'une version matérielle d'au moins l'un des sous-dispositifs de commande programmables à l'aide d'un dispositif de contrôle disposé dans le dispositif de commande principal, le dispositif de commande principal étant configuré pour
la mise en mémoire en avant d'une pluralité de modules de fonctionnement ayant un état de version différent pour un sous-dispositif de commande défini,
et, si le sous-dispositif de commande défini est déterminé comme programmable, la transmission au sous-dispositif de commande défini d'un module de fonctionnement approprié à une version matérielle déterminée,
et, si le sous-dispositif défini est déterminé comme non programmable, le saut du sous-dispositif de commande défini et le passage à un sous-dispositif de commande prochain à étudier.

12. Système suivant la revendication 11, **caractérisé par**
un dispositif de contrôle, qui est configuré pour contrôler à l'instant défini à l'avance, si tous les sous-dispositifs de commande programmables sont déjà aptes à fonctionner et/ou sont programmés avec un état de logiciel défini à l'avance et, en fonction du résultat du contrôle, pour l'aptitude à fonctionner et/ou la mise à jour sur un état de logiciel défini à l'avance, déclencher une programmation indépendante de sous-dispositifs de commande inaptes à fonctionner et/ou non programmés par un état de logiciel défini à l'avance.

13. Système suivant la revendication 12, **caractérisé en ce que**
le dispositif de contrôle est configuré pour déterminer l'un des sous-dispositifs de commande à programmer et pour provoquer une transmission d'au moins un module de fonctionnement défini pour le sous-dispositif de commande déterminé à ce dernier.

14. Système suivant la revendication 11, **caractérisé en ce que**
le dispositif de commande principal est configuré pour programmer inconditionnellement à chaque instant défini à l'avance au moins l'un des sous-dispositifs de commande programmables.

15. Système suivant la revendication 14, **caractérisé en ce que**
l'instant défini à l'avance est un instant de branchement du système interconnecté de sous-dispositifs de commande programmables et le dispositif de commande principal est configuré pour programmer à cet instant de branchement tous les sous-dispositifs de commande programmables, ou est un instant de branchement d'au moins l'un des sous-dispositifs de commande programmables et le dispositif de commande principal est configuré pour programmer à cet instant de branchement le au moins un des sous-dispositifs de commande programmables.

16. Système suivant la revendication 11, **caractérisé en ce que**
le dispositif de commande principal et/ou au moins l'un des sous-dispositifs de commande programmables sont agencés, de manière à effectuer une programmation du au moins un des sous-dispositifs de commande programmables sur une instruction dans le cadre d'un processus de diagnostic de système en cours.

17. Système suivant la revendication 11, **caractérisé en ce que**
le module de base est une très petite unité logicielle et/ou un bootlader.

18. Système suivant l'une des revendications 11 à 17, **caractérisé en ce que**
le système est un système électronique de freinage d'un véhicule et le dispositif de commande principal forme une centrale et/ou un dispositif maître, qui est relié par un bus SCAN comme réseau à au moins un module (EPM) de réglage de la pression de roue, à un module (FBM) de frein au pied et/ou à un module (TCM) de commande de remorque comme sous-dispositifs de commande, qui forment respectivement des dispositifs esclaves.
